# EUROPÄISCHE PATENTANMELDUNG

(11) **EP 1 657 111 A2**
(43) Veröffentlichungstag der Anmeldung: **17.05.2006**
(21) Anmeldenummer: 05024931.7
(22) Anmeldetag: 15.11.2005
(51) Int. Cl.: B60Q 1/26, B60R 1/12, G02B 6/00

(54) **Seitenblinkleuchte**

(30) Priorität: 15.11.2004 DE 102004055015
(71) Anmelder: FER Fahrzeugelektrik GmbH, 99817 Eisenach (DE)
(72) Erfinder: Bräutigam, Markus, 36433 Immelborn (DE); Gotthardt, Frank, Dr., 37077 Göttingen (DE); Schwanz, Martina, 99831 Creuzburg (DE); Matthie, Daniel, 99817 Eisenach (DE); Makarov, Aliaksandr, 99817 Eisenach (DE)
(74) Vertreter: Strasser, Wolfgang

(57) **Zusammenfassung**

Eine Seitenblinkleuchte (1) für einen Außen-Rückblickspiegel umfasst ein Leuchtengehäuse (2), mit einer Lichtaustrittsöffnung (3), die sich von der Fahrzeugseite in etwa horizontal zur Außenseite hin erstreckt. Wenigstens ein Lichtleiter (6, 7) verläuft über die Lichtaustrittsöffnung hinweg. Das Licht einer Lichtquelle (10, 11) wird in das fahrzeugseitige Stirnende (8; 9) des Lichtleiters eingekoppelt und breitet sich in Längsrichtung aus. Der am gegenüberliegenden Stirnende (12, 13) ankommende Lichtanteil wird zur Fahrtrichtung schräg nach hinten abgestrahlt. Zur Erweiterung der Funktionalität weist der wenigstens eine Lichtleiter auf seiner Rückseite eine Vielzahl von über seine Länge verteilt angeordneten Umlenkstrukturen (15) auf, die das auf sie auffallende Licht so umlenken, dass es durch die Vorderseite des Lichtleiters austritt, in der eine Vielzahl von optisch wirksamen Strukturen (17) ausgebildet ist, die über die Länge des Lichtleiters verteilt angeordnet sind und einen Teil des austretenden Lichts in einen sich quer zur Fahrtrichtung erstreckenden Winkelbereich (S₂-S₃) abstrahlen.

## Beschreibung

Die Erfindung betrifft eine Seitenblinkleuchte der im Oberbegriff von Anspruch 1 genannten Art.

Eine solche Seitenblinkleuchte ist aus EP 1 195 296 A2 bekannt. Sie umfasst wenigstens einen, stabförmigen Lichtleiter, der sich im eingebauten Zustand in etwa horizontal über die Lichtaustrittsöffnung hinweg erstreckt und dabei an die Krümmung der Außenspiegel-Abdeckkappe angepasst ist. In das fahrzeugseitige Stirnende des Lichtleiters wird das Licht einer Leuchtdiode so eingekoppelt, dass es sich in seiner Längsrichtung ausbreitet und nahezu vollständig am gegenüberliegenden Stirnende ankommt, wo es in den durch gesetzliche Vorschriften festgelegten Raumbereich bezüglich der Fahrtrichtung nach schräg hinten abgestrahlt wird.

Diese bekannte Anordnung geht davon aus, dass vergleichsweise schwache Leuchtdioden zum Einsatz kommen, deren Licht nahezu vollständig an das Auskoppel-Stirnende des Lichtleiters weitergeleitet werden muss, um im Abstrahlbereich die gesetzlich erforderliche Helligkeit zu erzielen.

Diese bekannte Fahrzeugleuchte hat daher nur eine einzige Funktion, nämlich die einer Seitenblinkleuchte.

Demgegenüber liegt der Erfindung die Aufgabe zugrunde, eine Seitenblinkleuchte der eingangs genannten Art so weiterzubilden, dass sie mehr als nur eine einzige Funktion ausüben kann.

Zur Lösung dieser Aufgabe sieht die Erfindung die im Anspruch 1 zusammengefassten Merkmale vor.

Dieser Ausbildung liegt die Erkenntnis zugrunde, dass es aufgrund der Tatsache, dass inzwischen sehr helle Leuchtdioden zur Verfügung stehen, nicht mehr erforderlich ist, nahezu das gesamte in den stabförmigen Lichtleiter eingekoppelte Licht zum gegenüberliegenden Stirnende weiterzuleiten, um dort die erforderliche Abstrahl-Helligkeit zu erzielen.

Vielmehr ist es mit diesen modernen Leuchtdioden ohne weiteres möglich, Anteile des sich im Lichtleiter ausbreitenden Lichts nach und nach mit Hilfe von über die Länge des Lichtleiters verteilt angeordneten Umlenkstrukturen so umzulenken, dass sie durch seine der Lichtdurchtrittsscheibe der Fahrzeugleuchte zugewandte Vorderseite austreten, ohne am Auskoppel-Stirnende zu viel an abstrahlbarer Helligkeit eingebüßt zu haben.

Die über die Länge des Lichtleiters hinweg ausgekoppelten Lichtanteile können dann durch in der Vorderseite des Lichtleiters ausgebildete, optisch wirksame Strukturen erfindungsgemäß mit ausreichender Helligkeit in den Winkelbereich abgestrahlt werden, der vom Gesetzgeber für Seitenmarkierungsleuchten gefordert wird.

Auf diese Weise erhält die erfindungsgemäße Seitenblinkleuchte eine zweite Funktion.

Gemäß einer besonders bevorzugten Ausführungsform ist vorgesehen, dass auf der Rückseite des Lichtleiters weitere Umlenkstrukturen über seine Länge verteilt im Abstand angeordnet und so ausgebildet sind, dass sie den jeweils auf sie auftreffenden Lichtanteil für ein Austreten durch die Vorderseite umlenken und dabei so bündeln, dass sein Öffnungswinkel in etwa dem einer Leuchtdiode entspricht. Im Betrieb hat der Betrachter dann den Eindruck, dass über die Länge des Lichtleiters verteilt mehrere einzelne voneinander im Abstand angeordnete Leuchtdioden angeordnet sind, die ihr Licht in etwa in Fahrtrichtung abstrahlen. Durch die Erzeugung dieser virtuellen Leuchtdioden erhält die erfindungsgemäße Fahrzeugleuchte eine dritte Funktion.

Diese und andere vorteilhafte Ausgestaltungen einer erfindungsgemäßen Seitenblinkleuchte sind in den Unteransprüchen niedergelegt.

Die Erfindung wird im folgenden anhand eines Ausführungsbeispiels unter Bezugnahme auf die Zeichnung beschrieben ; in dieser zeigen:
- Figur 1: eine stark schematisierte Vorderansicht einer erfindungsgemäßen Seitenblinkleuchte in Einbaulage entgegen der Fahrtrichtung gesehen, wobei der Deutlichkeit halber die die Lichtaustrittsöffnung abdeckende Lichtdurchtrittscheibe weggelassen ist, und
- Figur 2: einen Schnitt längs der Linie II-II durch die Seitenblinkleuchte aus Figur 1 mit hinzugefügter Lichtdurchtrittsscheibe.

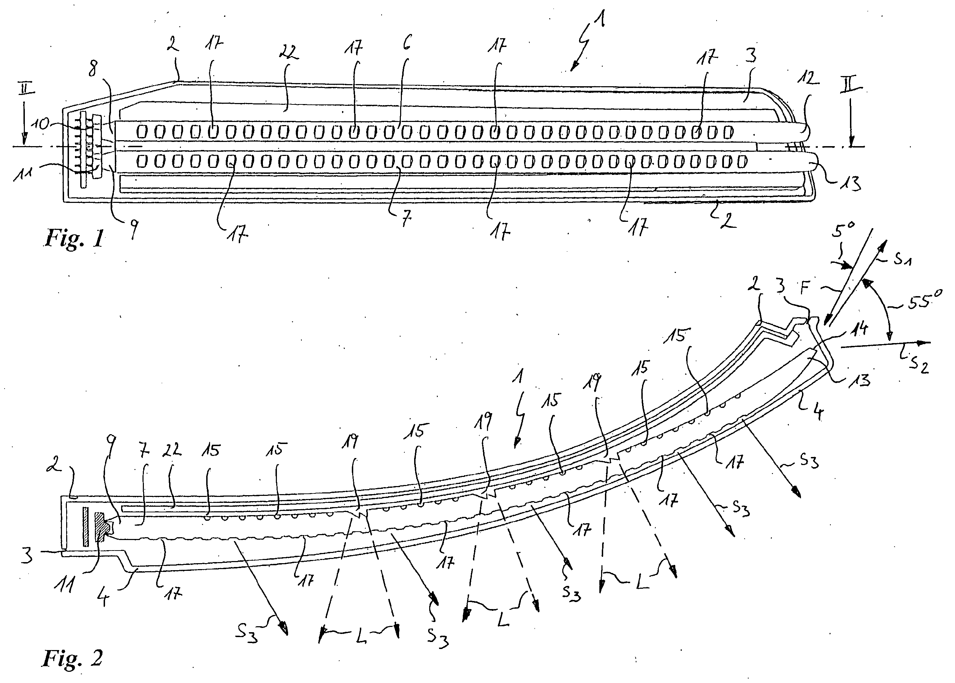

Wie man den Figuren entnimmt, umfasst eine erfindungsgemäße Seitenblinkleuchte 1 für den Einbau in die (nicht dargestellte) Abdeckkappe eines Außenrückblickspiegels insbesondere eines Kraftfahrzeuges ein Leuchtengehäuse 2, das eine lang gestreckte Lichtaustrittsöffnung 3 aufweist, die sich im eingebauten Zustand von der in den Figuren links befindlichen, näher beim Fahrzeug liegenden Seite ausgehend in etwa horizontal zur rechts liegenden Außenseite des Fahrzeugs hin erstreckt. Im montierten Zustand ist diese Lichtaustrittsöffnung 3 durch eine Lichtdurchtrittsscheibe 4 (siehe Fig. 2) abgedeckt.

Im Inneren des Gehäuses 2 befinden sich zwei stabförmige Lichtleiter 6, 7, die in etwa die gleiche Länge wie die Lichtaustrittsöffnung 3 besitzen und sich im eingebauten Zustand über diese hinweg in etwa horizontal so erstrecken, dass ihre der Lichtdurchtrittsscheibe 4 zugewandte Vorderseite durch die Lichtdurchtrittsscheibe 4 hindurch sichtbar ist.

In das in den Figuren links liegende Stirnende 8, 9 des Lichtleiters 6 bzw. 7 wird das Licht jeweils einer von einer sehr hellen Leuchtdiode gebildeten Lichtquelle 10, 11 so eingekoppelt, dass es sich in Längsrichtung des betreffenden Lichtleiters 6 bzw. 7 zu dessen Stirnende 12, 13 hin ausbreitet. Dieses gegenüberliegendem Stirnende ist in an sich bekannter Weise so mit einer Abschrägung 14 versehen (siehe Fig. 2), dass das dort ankommende Licht in einen in der Draufsicht der Figur 2 etwa 55° betragenden, durch die Pfeile S₁ und S₂ gekennzeichneten Winkelbereich abgestrahlt wird, dessen linke Begrenzung S₁ mit der Fahrtrichtung F im Uhrzeigersinn einen Winkel von etwa 5° einschließt. Dies entspricht dem durch gesetzliche Vorschriften festgelegten Lichtabstrahlungsbereich für eine in einem Au-βenrückblickspiegel angeordnete Seitenblinkleuchte.

Wie dies in Figur 2 für den Lichtleiter 7 sichtbar ist, sind auf der von der Lichtscheibe 4 abgewandten Rückseite der Lichtleiter 6, 7 erste Umlenkstrukturen 15 vorgesehen, die über die Länge der Lichtleiter 6, 7 in etwa gleichmäßig verteilt angeordnet sind und dazu dienen, die auf sie auftreffenden Anteile des sich in Längsrichtung der Lichtleiter 6, 7 ausbreitenden Lichts so umzulenken, dass sie durch deren Vorderseiten zur Lichtdurchtrittsscheibe 4 hin austreten und durch diese hindurch nach außen gelangen.

In der Vorderseite eines jeden Lichtleiters 6, 7 sind optisch wirksame Strukturen 17 in Form von fensterartigen Einkerbungen ausgebildet, die das durch sie hindurch tretende Licht mit der vom Gesetzgeber für Seitenmarkierungsleuchten geforderten Intensität in einen durch die Pfeile S₃ gekennzeichneten Raumbereich hinein abstrahlen, dessen in Figur 2 linke Begrenzung S₃ mit dem Pfeil S₂ einen Winkel von etwa 60° einschließt.

Auf diese Weise kann eine erfindungsgemäße Seitenblinkleuchte eine doppelte Funktion erfüllen, nämlich im Blinkbetrieb den einer herkömmlichen Seitenblinkleuchte und im Dauerbetrieb den einer Fahrzeug-Seitenmarkierungsleuchte.

Weiterhin zeigt die Figur 2, dass auf der Rückseite eines jeden Lichtleiters 6, 7 zweite Umlenkstrukturen 19 in wesentlich größeren Abständen als die ersten Umlenkstrukturen 15 und zwischen diesen angeordnet sind.

Die zweiten Umlenkstrukturen 19 sind so ausgebildet, dass sie die auf sie auftreffenden Teile des sich in Längsrichtung des jeweiligen Lichtleiters 6, 7 ausbreitenden Lichts so umlenken und bündeln, dass es durch die Vorderseite des betreffenden Lichtleiters 6, 7 mit einem Öffnungswinkel austritt, der in etwa dem einer regulären Leuchtdiode entspricht (Pfeile L). Auf diese Weise werden virtuelle Leuchtdioden erzeugt, von denen im vorliegenden Fall beispielsweise drei vorhanden sind.

Um die Lichtausbeute zu verbessern, ist auf der von der Lichtdurchtrittsscheibe 4 abgewandten Seite der Lichtleiter 6, 7 eine Reflektorblende 22 angeordnet, die Licht, das aus den Lichtleitern 6, 7 nach hinten austritt, nach vorne umlenkt.

## Patentansprüche

1. Seitenblinkleuchte (1) für den Einbau in die Abdeckkappe eines AußenRückblickspiegels eines Fahrzeugs mit
- einem Leuchtengehäuse (2), das eine lang gestreckte Lichtaustrittsöffnung (3) aufweist, die sich im eingebauten Zustand von der näher beim Fahrzeug liegenden Seite der Abdeckkappe ausgehend in etwa horizontal zur Außenseite des Fahrzeugs hin erstreckt,
- wenigstens einem Lichtleiter (6, 7), der in etwa die gleiche Länge wie die Lichtaustrittsöffnung (3) besitzt und sich im eingebauten Zustand über diese hinweg in etwa horizontal erstreckt, und
- wenigstens einer Lichtquelle (10, 11), deren Licht in das näher beim Fahrzeug liegende Stirnende (8; 9) des Lichtleiters (6, 7) so eingekoppelt wird, dass es sich in dessen Längsrichtung ausbreitet, wobei der am gegenüberliegenden Stirnende (12, 13) ankommende Teil dieses Lichts in einer zur Fahrtrichtung im wesentlichen schräg nach hinten verlaufenden Richtung (S₁-S₂) abgestrahlt wird,
**dadurch gekennzeichnet,**
- **dass** der wenigstens eine Lichtleiter (6, 7) auf seiner von der Lichtaustrittsöffnung (3) abgewandten Rückseite eine Vielzahl von über seine Länge in etwa gleichförmig verteilt angeordneten Umlenkstrukturen (15) aufweist, die den auf sie auffallenden Teil des sich in Längsrichtung des Lichtleiters (6, 7) ausbreitenden Lichts zur Vorderseite des Lichtleiters hin so umlenken, dass es durch diese austritt, und
- **dass** in der Vorderseite des Lichtleiters (6, 7) eine Vielzahl von optisch wirksamen Strukturen (17) ausgebildet ist, die in etwa gleichförmig über die Länge des Lichtleiters (6, 7) verteilt angeordnet sind und einen Teil des aus der Vorderseite des Lichtleiters (6, 7) austretenden Lichts in einen sich quer zur Fahrtrichtung erstreckenden Winkelbereich (S₂-S₃) abstrahlen.

2. Seitenblinkleuchte nach Anspruch 1, **dadurch gekennzeichnet, dass** die optisch wirksamen Strukturen (17) einen Teil des aus der Vorderseite des Lichtleiters (6, 7) austretenden Lichts auch in einen sich in Fahrtrichtung schräg nach vome erstreckenden Winkelbereich abstrahlen.

3. Seitenblinkleuchte nach Anspruch 1 oder 2, **dadurch gekennzeichnet, dass** der wenigstens eine Lichtleiter (6, 7) stabförmig ausgebildet ist.

4. Seitenblinkleuchte nach einem der vorhergehenden Ansprüche, **dadurch gekennzeichnet, dass** der Lichtleiter (6, 7) an seinem freien Stirnende (12, 13), an welchem er das von der Lichtquelle eingekoppelte Licht abstrahlt, mit einer Abschrägung versehen ist.

5. Seitenblinkleuchte nach einem der vorhergehenden Ansprüche, **dadurch gekennzeichnet, dass** die Lichtquelle (10, 11) eine Leuchtdiode ist.

6. Seitenblinkleuchte nach einem der vorhergehenden Ansprüche, **dadurch gekennzeichnet, dass** hinter dem wenigstens einen Lichtleiter (6, 7) eine bedampfte Reflektorblende (22) angeordnet ist.

7. Seitenblinkleuchte nach einem der vorhergehenden Ansprüche, **dadurch gekennzeichnet, dass** auf der Rückseite des Lichtleiters (6, 7) weitere Umlenkstrukturen (19) ausgebildet und mit größeren Abständen als die ersten Umlenkstrukturen (15) über seine Länge verteilt angeordnet sind, die den auf sie auffallenden Teil des sich in Längsrichtung des Lichtleiters (6, 7) ausbreitenden Lichts so bündeln und zur Vorderseite des Lichtleiters (6, 7) hin umlenken, dass er durch diese mit einem in etwa dem Abstrahlungswinkel einer Leuchtdiode entsprechenden Öffnungswinkel (L, L) austritt.

8. Seitenblinkleuchte für den Einbau in die Abdeckkappe eines Außen-Rückblickspiegels eines Fahrzeugs mit
- einem Leuchtengehäuse (2), das eine lang gestreckte Lichtaustrittsöffnung (3) aufweist, die sich im eingebauten Zustand von der näher beim Fahrzeug liegenden Seite der Abdeckkappe ausgehend in etwa horizontal zur Außenseite des Fahrzeugs hin erstreckt,
- wenigstens einem Lichtleiter (6, 7) der in etwa die gleiche Länge wie die Lichtaustrittsöffnung (3) besitzt und sich im eingebauten Zustand über diese hinweg in etwa horizontal erstreckt, und
- wenigstens einer Lichtquelle (10, 11), deren Licht in das näher beim Fahrzeug liegende Stirnende (8, 9) des Lichtleiters (6, 7) so eingekoppelt wird, dass es sich in dessen Längsrichtung ausbreitet,
**dadurch gekennzeichnet,**
- **dass** auf der Rückseite des Lichtleiters (6, 7) weitere Umlenkstrukturen (19) ausgebildet und in Abständen über seine Länge verteilt angeordnet sind und den auf sie auffallenden Teil des sich in Längsrichtung des Lichtleiters (6, 7) ausbreitenden Lichts so bündeln und zur Vorderseite des Lichtleiters (6, 7) hin umlenken, dass er durch diese mit einem in etwa dem Abstrahlungswinkel einer Leuchtdiode entsprechenden Öffnungswinkel austritt.

9. Seitenblinkleuchte nach Anspruch 7, **dadurch gekennzeichnet, dass** der an dem weiter vom Fahrzeug entfernt liegenden Stirnende (12, 13) ankommende Teil des in den Lichtleiter eingekoppelten Lichts in einer zur Fahrtrichtung im wesentlichen schräg nach hinten verlaufenden Richtung abgestrahlt wird (S₁-S₂).
